# EUROPÄISCHE PATENTSCHRIFT

(11) **EP 0 603 114 B1**
(45) Veröffentlichungstag und Bekanntmachung des Hinweises auf die Patenterteilung: **08.01.1997**
(21) Anmeldenummer: 93810761.2
(22) Anmeldetag: 01.11.1993
(51) Int. Cl.: F16B 7/04, F16B 2/00

(54) **Klemmvorrichtung**
Clamping device
Dispositif de serrage

(30) Priorität: 15.12.1992 CH 3828/92
(43) Veröffentlichungstag der Anmeldung: 22.06.1994
(73) Patentinhaber: USM U. SCHAERER SOEHNE AG, CH-3110 Münsingen (CH)
(72) Erfinder: Schärer, Paul, CH-3110 Münsingen (CH); Stöckli, Kaspar, CH-3117 Kiesen (CH)
(74) Vertreter: Roshardt, Werner Alfred, Dipl.-Phys.

(56) Entgegenhaltungen:
- CH-A- 488 120
- DE-B- 1 264 902
- DE-C- 625 371
- DE-U- 8 228 118
- FR-A- 2 278 981
- GB-A- 1 266 350
- US-A- 3 945 743

## Beschreibung

Die Erfindung betrifft eine Klemmvorrichtung gemäss dem Oberbegriff des Patentanspruchs 1 sowie eine lösbare Verbindungsanordnung gemäss Anspruch 7 und ein Einrichtungssystem gemäss Anspruch 8.

Aus hohlprofilförmigen Konstruktionselementen zusammensetzbare Einrichtungssysteme (Gestell-, Möbelsysteme etc.) sind allgemein bekannt und wegen der vielseitigen Einsatzmöglichkeiten beliebt. Wichtig bei solchen Einrichtungssystemen ist, dass die Verbindungen zwischen den einzelnen Elementen (z. B. zwischen Säulen und Streben) belastungsfähig und ästhetisch vorteilhaft sind.

Aus der CH-A 429 317, CH-A 488 120 und der EP-A1 0 455 945 sind Klemmverbindungen der eingangs genannten Art bekannt. Sie weisen jeweils zwei Keilelemente auf, die durch eine die Keile in Längsrichtung durchsetzende Schraube gegeneinander gezogen und infolge der Keilform gleichzeitig mit der axialen Verschiebung radial zur Rohrinnenwand der Strebe bewegt und schliesslich an diese angepresst werden. Die Keilelemente bestehen üblicherweise aus formgleichen halbzylindrischen Hohlprofilen aus Stahlblech, deren Ränder je eine gleiche keilförmige Sägezahnung aufweisen.

Die Zugbelastbarkeit der bekannten Klemmvorrichtungen erreicht oft nicht das gewünschte Mass, namentlich dann nicht, wenn die Schraube beim Anpressvorgang nicht mit ausreichender Kraft angezogen wird.

Die im Anspruch 1 angegebene Erfindung löst die Aufgabe, die Zugbelastbarkeit der Klemmvorrichtung der eingangs genannten Art zu verbessern.

Die Erfindung nutzt die Hartgranulat-Pressverbindungstechnik für dreh- und schiebefeste Verbindungen von senkrecht aufeinander gepressten Teilen. Mit der Hartgranulat-Pressverbindungstechnik befasst sich schon die DE-C 625 371. Ein Beispiel einer drehfesten Pressverbindung, nämlich der Verbindung zwischen zwei Wellen mit Hilfe einer dazwischen angeordneten Scheibe beschreibt die DE-U 82 28 118. Ein Beispiel einer schiebefesten Pressverbindung einer Dichtung mit der zu dichtenden Fläche veranschaulicht die DE-B 12 64 902. Dabei ist jeweils mindestens eine der beiden senkrecht aufeinander zu pressenden Verbindungsflächen mit dem Hartmaterialgranulat beschichtet. Beim Zusammenpressen dringen die Spitzen der Hartmaterialkörner in die Verbindungsfläche ein, wodurch gleichsam eine Verzahnung, mithin nicht nur eine kraftschlüssige, sondern auch eine formschlüssige Verbindung mit sehr hohem Reibwert entsteht.

Die altbekannte und bewährte Hartgranulat-Pressverbindungstechnik hat bisher keinen Eingang in die ebenfalls seit Jahrzehnten bekannte, durch Keilverschiebung bewirkte Klemmverbindungstechnik gefunden. Der Grund liegt auf der Hand: Eine Hartgranulat-Beschichtung musste dem Fachmann an dem axial zu verschiebenden Keilelement abwegig erscheinen, weil sie der zum Anpressen nötigen axialen Bewegung einen sehr hohen Reibwert entgegensetzt.

Gemäss einer bevorzugten Ausführungsform ist das Hartmaterialgranulat ein Quarzgranulat. Die Beschichtung wird zweckmässig durch ein Kunstharz mit untergemischtem Quarzgranulat gebildet. Wie an sich aus der Hartgranulat-Pressverbindungstechnik bekannt ist, erzeugt das Hartgranulatmaterial eine Rauhigkeit, die dem Kraftschluss dienlich ist. Die Spitzen der in der Beschichtung eingebetteten Hartmaterialkörner dringen bei dem für den Kraftschluss erforderlichen hohen Pressdruck in das kontaktierende Material ein, was zu einer feinen Verzahnung führt.

Typischerweise wird die erwähnte Klemmvorrichtung in einem Hohlprofil aus Stahl eingesetzt. Die Quarzgranulat-Beschichtung wird somit auf eine Stahloberfläche gepresst. Es hat sich gezeigt, dass dadurch ein sehr guter Reibschluss realisiert werden kann.

Gemäss einer besonders bevorzugten Ausführungsform umfasst die Klemmvorrichtung zwei Keilhülsenhälften aus Stahlblech. Diese lassen sich mit verhältnismässig geringem Aufwand herstellen.

Es hat sich gezeigt, dass dem zwischen den Keilhülsen gebildeten Keilwinkel eine grosse Bedeutung zukommt. Ist er zu gross, so gleiten die Keilhülsenhälften zu wenig gut aufeinander. Ist er dagegen zu klein, so ist die Spreizwirkung zu gering. Es wurde nun gefunden, dass ein Keilwinkel von ca. 17° zu einem optimalen Kraftschluss führt.

Gemäss einer vorteilhaften Ausführungsform sind die Keilhülsenhälften einstückig aus einem Stahlblech geformt. Jede Keilhülsenhälfte ist im Achsenquerschnitt U-förmig und hat eine die Keilhülsenhälfte (resp. deren U-förmigen Profilam einen Ende axial abdeckende Lasche. Die Lasche weist eine Bohrung für eine Schraube auf und ist auf der Stirnseite des U-förmigem Profilteils abgestützt. Die Schraube dient zum Spreizen der Klemmvorrichtung.

In der Regel sind die Keilhülsenhälften als zwei selbständige Teile ausgebildet. Zwecks Erleichterung der Montage sind sie bei der Auslieferung vorzugsweise durch eine zerreissbare Klebefolie zusammengehalten. Die Klebefolie wird bei der Montage durch das Spreizen der Klemmvorrichtung getrennt.

Die Erfindung eignet sich für Möbel- und Gestellsysteme aller Art. Die Klemmverbindung wird z. B. in einer Strebe eingesetzt und an einer Säule festgeschraubt. Für die Befestigungsart an der Säule gibt es verschiedene Möglichkeiten. Bevorzugt ist eine Halteringanordnung, wie sie aus der eingangs zitierten EP 0 455 945 A1 bekannt ist. Selbstverständlich eignet sich auch die Kugelkopfanordnung gemäss CH-PS 429 317 oder CH-PS 488 120.

Aus der Detailbeschreibung und der Gesamtheit der Patentansprüche ergeben sich weitere bevorzugte Ausführungsformen und Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Eine Schnittdarstellung einer erfindungsgemässen Verbindungsanordnung zwischen einer Säule und einer Strebe;
- Fig. 2: eine perspektivische Darstellung einer erfindungsgemässen Keilhülsenhälfte von zwei verschiedenen Seiten;
- Fig. 3: eine Seitenansicht von zwei zusammengeklebten Keilhülsenhälften.

Grundsätzlich sind in den Figuren gleiche Teile mit gleichen Bezugszeichen versehen.

### Wege zur Ausführung der Erfindung

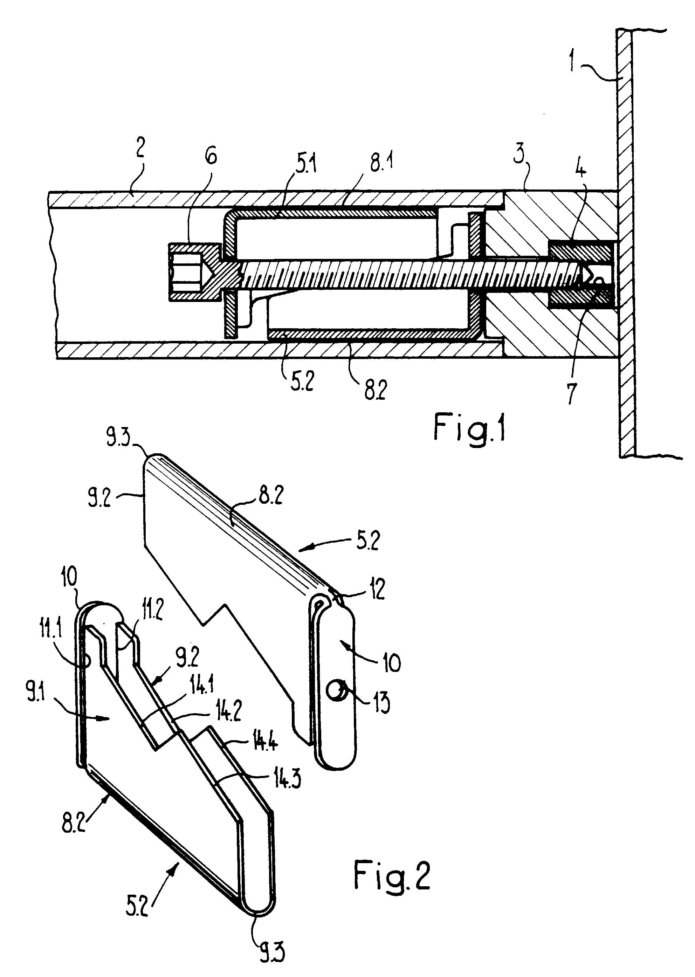

Fig. 1 zeigt eine erfindungsgemässe Verbindungsanordnung im Schnitt. An einer z. B. hohlzylindrischen Säule 1 ist eine hohlprofilförmige Strebe 2 mittels einer im folgenden zu beschreibenden erfindungsgemässen Klemmvorrichtung, einem Haltering 4 und einem Uebergangsstück 3 befestigt. Der Haltering 4 umschliesst die Säule 1 und weist vorzugsweise mehrere, entlang des Umfangs verteilte Gewindebohrungen (in Fig. 1 mit Bezugszeichen 7 gekennzeichnet) auf. Das Uebergangselement 3 umgreift den Haltering 4 zangenartig. Es überträgt Drehmomente der Strebe 2 auf den Haltering 4. Ferner schafft es einen ästhetisch sauberen Uebergang zwischen der Strebe 2 und der Säule 1.

Das Prinzip der Halteringbefestigung ist in der EP 0 455 945 A1 detailliert beschrieben. An dieser Stelle braucht deshalb nicht näher auf sie eingegangen zu werden.

Die erfindungsgemässe Klemmvorrichtung umfasst zwei Keilhülsenhälften 5.1, 5.2. Sie werden durch eine in Achsenlängsrichtung der Strebe 2 verlaufende Schraube 6 in Achsenrichtung gegeneinander gezogen. Aufgrund ihrer keilartigen Beschaffenheit werden sie dabei gleichzeitig in radialer Richtung nach aussen an die Innenwand der Strebe 2 gepresst. Der resultierende Kraftschluss (zwischen Keilhülse und Strebe) stellt das Grundprinzip der vorliegenden Verbindungsanordnung dar.

Gemäss der Erfindung wird er massgeblich dadurch verbessert, dass die relevanten Oberflächen der Keilhülsenhälften 5.1, 5.2 zumindest bereichsweise mit einer Quarzgranulat-Beschichtung 8.1, 8.2 versehen sind. Die Zugbelastbarkeit der Verbindungsanordnung wird dadurch beträchtlich erhöht.

Fig. 2 zeigt die Keilhülsenhälfte 5.2 in perspektivischer Darstellung aus zwei verschiedenen Blickrichtungen. Sie ist gewissermassen zu sich selbst komplementär. D. h. die Klemmvorrichtung weist zwei identische, komplementäre Hälften auf.

Da im vorliegenden Beispiel die Strebe 2 in der Art eines Flachrohrs ausgebildet ist, weist die Keilhülsenhälfte 5.2 zwei mehr oder weniger ebene Seitenflächen 9.1, 9.2 und einen diese verbindenden runden Rücken 9.3 auf. Dadurch wird ein U-förmiger Profilteil gebildet. Auf den Stirnseiten 11.1, 11.2 der Seitenflächen 9.1, 9.2 liegt eine flache Lasche 10 auf. Sie ist flächenmässig etwas kleiner als der Innenquerschnitt der Strebe 2. Wie aus der Fig. 2 zu entnehmen ist, liegt die Lasche 10 beinahe entlang ihres gesamten Umfangs auf dem Profilteil auf.

Bei der Keilhülsenhälfte 5.2 der Fig. 2 ist zu erkennen, dass die erwähnte stirnseitig angebrachte Lasche 10 über einen Hals 12 mit dem U-förmigen Profilteil, insbesondere mit dessen rundem Rücken 9.3 in Verbindung steht. Die Keilhülsenhälfte 5.2 ist somit aus einem zusammenhängenden Stahlblechstück einer Dicke von z. B. 3 bis 4 mm geformt.

Gemäss einer besonders bevorzugten Ausführungsform der Erfindung ist die Keilhülsenhälfte 5.2 an ihrem Rücken 9.3, welcher formmässig an die entsprechende Innenfläche der Strebe 2 angepasst ist, mit einer Hartstoffgranulat-Beschichtung 8.2 bedeckt. Da die Seitenflächen 9.1, 9.2 zum Kraftschluss im wesentlichen nichts beitragen, sind sie unbeschichtet belassen.

Bei der Quarzgranulat-Beschichtung handelt es sich z. B. um ein Kunstharz mit untergemischten Quarzkörnern.

Die Lasche 10 weist ein zentral angeordnetes Loch 13 auf. Durch dieses ist die Schraube 6 hindurchzuführen.

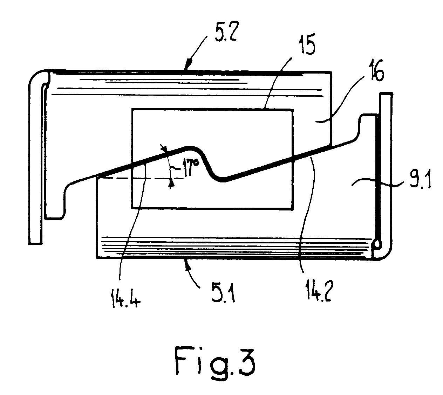

Die Keilhülsenhälften 5.1 und 5.2 liegen mit den längsseitigen Schmalseiten der Seitenflächen 9.1, 9.2 aufeinander auf. Die dadurch gebildeten Gleitflächen 14.1, 14.2 verlaufen unter einem Winkel von vorzugsweise etwa 17° zur Längsachse der Keilhülsenhälfte 5.2 (vgl. Fig. 3).

Jede Seitenfläche 9.1 resp. 9.2 weist vorzugsweise zwei Gleitflächen 14.1, 14.2 resp. 14.3, 14.4 auf. Die Gleitflächen 14.1 und 14.3 resp. 14.2 und 14.4 einer Seitenfläche 9.1 resp. 9.2 sind durch eine Stufe voneinander abgetrennt. Dadurch wird vermieden, dass die Keilhülsenhälfte 5.2 allzu spitz zuläuft.

Wie in Fig. 3 gezeigt ist, sind die Keilhülsenhälften 5.1 und 5.2 durch auf den Seitenflächen aufgebrachte Klebefolien zwecks Erleichterung der Montage verbunden. In Fig. 3 ist eine Klebefolie 15 auf die Seitenflächen 9.1 und 16 aufgebracht. (Die in der Fig. nicht gezeigten rückseitigen Seitenflächen sind natürlich ebenfalls mit einer entsprechenden Klebefolie verbunden.) Die Klebefolie 15 ist vorzugsweise durchsichtig.

Die Montage geht wie folgt vor sich: In die zusammengefügten Keilhülsenhälften 5.1 und 5.2 wird die Schraube 6 eingeführt. Ferner wird die Schraube durch das Uebergangselement 3 hindurch in die Gewindebohrung 7 des Halterings 4 geschraubt. Nun wird die Strebe 2 über die Keilhülsenhälften 5.1, 5.2 geschoben. Beim darauffolgenden Anziehen der Schraube 6 werden die Keilhülsenhälften 5.1, 5.2 entlang der Gleitflächen gegeneinander verschoben; die Klebefolien reissen durch. Durch weiteres Anziehen der Schraube 6 spreizt sich die erfindungsgemässe Klemmvorrichtung, was zur Verankerung derselben im Ende der Strebe 2 führt.

Es leuchtet ein, dass die Klebefolie das Hantieren mit den Keilhülsen beträchtliche erleichtert.

Die erfindungsgemässen Keilhülsenhälften lassen sich wie folgt herstellen: Aus einem geeigneten Stahlblech wird ein Formstück der gewünschten Abmessung gestanzt. Vorzugsweise geschieht dies durch Feinstanzen. Diese an sich bekannte Technik ergibt eine saubere Ausführung der Gleitflächen. Eine aufwendige Nachbearbeitung der Stanz-Kanten entfällt weitgehend.

Danach wird der Formteil geprägt. D. h. der Rücken 9.3 wird gekrümmt, so dass die Seitenflächen 9.1, 9.2 parallel zueinander zu liegen kommen. Die Lasche 10 wird gegen die Stirnseiten der Seitenflächen 9.1, 9.2 abgekantet.

Nun wird der Rücken 9.3 mit der Quarzgranulat-Beschichtung versehen. Für die Auslieferung werden zwei Keilhülsenhälften 5.1, 5.2 mit Klebefolien zusammengehängt.

Zusammenfassend kann festgehalten werden, dass durch die Erfindung eine optimierte Klemmvorrichtung für Einrichtungssysteme aller Art geschaffen worden ist.

## Patentansprüche

1. Klemmvorrichtung mit zwei in einem Hohlprofil (2) durch Spreizen kraftschlüssig zu verankernden Keilelementen (5.1, 5.2), die zum Spreizen mittels einer Schraube (6) in Achsenlängsrichtung des Hohlprofils (2) gegeneinander verschiebbar sind, wobei gleichzeitig mit der axialen Verschiebung entsprechend dem Keilwinkel eine radiale Bewegung einer für den Kraftschluss verantwortlichen Oberfläche erfolgt, dadurch gekennzeichnet, dass die Oberfläche (9.3) zumindest teilweise durch eine vorzugsweise aus einem Kunstharz mit untergemischtem Quarzgranulat bestehende Hartmaterialgranulat-Beschichtung (8.2) gebildet ist.

2. Klemmvorrichtung nach Anspruch 1, dadurch gekennzeichnet, dass sie zwei Keilhülsenhälften (5.1, 5.2) aus Stahlblech umfasst.

3. Klemmvorrichtung nach Anspruch 2, dadurch gekennzeichnet, dass die Keilhülsenhälften einen Keilwinkel von etwa 17° bilden.

4. Klemmvorrichtung nach Anspruch 2 oder 3, dadurch gekennzeichnet, dass die Keilhülsenhälften (5.1, 5.2) einstückig aus einem Stahlblech geformt sind, wobei jede Keilhülsenhälfte (5.1, 5.2) einen U-förmigen Profilteil und eine den U-förmigen Profilteil an einem Ende axial abdeckende Lasche (10) aufweist.

5. Klemmvorrichtung nach Anspruch 4, dadurch gekennzeichnet, dass die Lasche (10) ein Loch (13) für eine Schraube (6) aufweist und auf der Stirnseite (11.1, 11.2) des U-förmigen Profilteils der Keilhülsenhälfte (5.2) entlang des grössten Teils ihres Umfangs abgestützt ist.

6. Klemmvorrichtung nach einem der Ansprüche 2 bis 5, dadurch gekennzeichnet, dass die Keilhülsenhälften (5.1, 5.2) als zwei getrennte Teile ausgebildet sind, die zwecks Erleichterung der Montage durch mindestens eine zerreissbare Klebefolie (15) zusammengehalten sind.

7. Lösbare Verbindungsanordnung zwischen einem rohrförmigen Hohlprofil (2) und einem weiteren Konstruktionselement (1), gekennzeichnet durch eine im Hohlprofil (2) kraftschlüssig abgestützte Klemmvorrichtung nach einem der Ansprüche 1 bis 6, welche mit dem weiteren Konstruktionselement (1) mittels einer Schraubverbindung lösbar verbunden ist.

8. Aus Konstruktionselementen bestehendes Einrichtungssystem, insbesondere Gestellsystem, umfassend hohlprofilförmige Streben (2) und Säulen (1) aus Stahl, gekennzeichnet durch mindestens eine Verbindungsanordnung nach Anspruch 7.

## Claims

1. Clamping device with two wedge elements (5.1, 5.2) which are to be anchored in a force-locking manner in a hollow profile part (2) by means of spreading and which, for the purpose of spreading, are displaceable in relation to one another by means of a screw (6) in the axial longitudinal direction of the hollow profile part (2), wherein, at the same time as the axial displacement, a radial movement, corresponding to the wedge angle, of a surface which is responsible for the force locking is performed, characterised in that the surface (9.3) is formed at least partially of a hard material granulate coating (8.2) which preferably consists of a plastic resin with intermixed quartz granulate.

2. Clamping device according to Claim 1, characterised in that it comprises two wedge sleeve halves (5.1, 5.2) of sheet steel.

3. Clamping device according to Claim 2, characterised in that the wedge sleeve halves form a wedge angle of approximately 17°.

4. Clamping device according to Claim 2 or 3, characterised in that the wedge sleeve halves (5.1, 5.2) are formed as a single piece from one sheet of steel, wherein each wedge sleeve half (5.1, 5.2) has a U-shaped profile part and a tongue (10) which covers the U-shaped profile part axially at one end.

5. Clamping device according to Claim 4, characterised in that the tongue (10) comprises a hole (13) for a screw (6) and is supported over the greater part of its periphery on the end face (11.1, 11.2) of the U-shaped profile part of the wedge sleeve half (5.2)

6. Clamping device according to any one of Claims 2 to 5, characterised in that the wedge sleeve halves (5.1, 5.2) are formed as two separate parts, which, for the purpose of making mounting easier, are held together by means of at least one tearable adhesive film (15).

7. A detachable arrangement for connection of a tubular hollow profile part (2) and another structural element (1), characterised by a clamping device according to one of Claims 1 to 6, which is supported in a force-locking manner in the hollow profile part (2), and which is detachably connected to the other structural element (1) by means of a screw connection.

8. Fitting system consisting of structural elements, in particular in a frame system, comprising hollow profile-shaped struts (2) and columns (1) of steel, characterised by at least one connection arrangement according to Claim 7.

## Revendications

1. Dispositif de serrage, comprenant deux éléments en forme de coins (5.1, 5.2) devant être verrouillés en force par écartement à l'intérieur d'un profil creux (2) pouvant coulisser l'un par rapport à l'autre dans la direction longitudinale de l'axe de ce profil creux (2) pour s'écarter l'un de l'autre au moyen d'une vis (6), un mouvement radial d'une surface réalisant le verrouillage en force se produisant simultanément au coulissement axial correspondant à l'angle du coin, caractérisé en ce que la surface (9.3) est constituée au moins en partie par une couche de granulat d'un matériau dur (8.2), formée de préférence d'une résine synthétique avec laquelle est mélangé un granulat de quartz.

2. Dispositif de serrage selon la revendication 1, caractérisé en ce qu'il comporte deux demi-douilles en coin (5.1, 5.2), en tôle d'acier.

3. Dispositif de serrage selon la revendication 2, caractérisé en ce que les demi-douilles forment un angle de coin d'environ 17°.

4. Dispositif de serrage selon la revendication 2 ou 3, caractérisé en ce que les demi-douilles en coin (5.1, 5.2) sont formées d'une seule pièce à partir d'une tôle d'acier, chaque demi-douille (5.1, 5.2) présentant une pièce profilée en forme de U et une languette (10) recouvrant axialement l'une des extrémités de cette pièce profilée.

5. Dispositif de serrage selon la revendication 4, caractérisé en ce que la languette (10) présente un trou (13) pour une vis (6) et s'appuie, sur la plus grande partie de son périmètre, contre la face frontale (11.1, 11.2) de la pièce profilée en forme de U de la demi-douille en coin (5.2).

6. Dispositif de serrage selon l'une quelconque des revendications 2 à 5, caractérisé en ce que les demi-douilles en coin (5.1, 5.2) sont formées en deux parties séparées, maintenues ensemble pour faciliter le montage par au moins une feuille de collage (15), pouvant être déchirée.

7. Ensemble de raccordement desserrable entre un profil creux en forme de tuyau (2) et un autre élément de construction (1), caractérisé par un dispositif de serrage selon l'une quelconque des revendications 1 à 6, qui s'appuie en force dans le profil creux (2), et est raccordé de manière desserrable à l'autre élément de construction (1) au moyen d'un raccord à vis.

8. Installation constituée d'éléments de construction, en particulier système d'échafaudage comportant des traverses (2) en forme de profilés creux et des colonnes (1) en acier, caractérisée par au moins un ensemble de raccordement selon la revendication 7.
